# EUROPEAN PATENT APPLICATION

(11) **EP 2 525 477 A1**
(43) Date of publication of application: **21.11.2012**
(21) Application number: 12003874.0
(22) Date of filing: 16.05.2012
(51) Int. Cl.: H02K 7/116, F16H 57/033

(54) **Series of gear motors**

(30) Priority: 19.05.2011 JP 2011112581
(71) Applicant: Sumitomo Heavy Industries, Ltd., Tokyo 141-6025 (JP)
(72) Inventor: Mizutani, Kiyonobu, Obu-shi Aichi 474-8501 (JP); Ogiwara, Isao, Obu-shi Aichi 474-8501 (JP); Ikegami, Masato, Obu-shi Aichi 474-8501 (JP); Fujino, Yasuhiro, Obu-shi Aichi 474-8501 (JP)
(74) Representative: Wagner, Karl H.

(57) **Abstract**

To suppress an increase in the number of types of motors of the whole series and form the respective basic series at low cost by commonly using the motors of the respective basic series with different efficiency.

Provided are a series of gear motors including: multiple types of gears G1 to G3 with different frame numbers; multiple types of motors Ma to Me with different frame numbers, the gear (any one of the gears G1 to G3) and (any one of the motors Ma to Me) of the specific frame number are connected to each other so as to forma gearmotor; a basic series IE1 in which the efficiency of the motors Ma1 to Mc1 is low; and a basic series IE2 in which the efficiency of the motors Mb2 to Md2 is higher than that of the basic series IE1. For example, the motor Mb1 which is connected to the gear G2 of the specific frame number 2 of the basic series IE1 is connected to the gear G1 of the frame number smaller than the specific frame number 2 of the basic series IE2, so that it is used as the motor Mb2 with high efficiency of the basic series IE2.

## Description

### BACKGROUND OF THE INVENTION

### Field of the Invention

The present invention relates to a series of gear motors.

Priority is claimed on Japanese Patent Application No. 2011-112581, filed on May 19, 2011, the content of which is incorporated herein by reference.

### Description of Related Art

A gear motor that is formed by the combination of a motor generating a driving force and a speed reducer (a gear) converting the rotation speed of the motor into a slower and stronger output torque has been widely used in many industrial machines and the like.

In general, this kind of gear motor is formed as a series so that various allowable torques (which may be understood as the concept of the capacity or the size) and various speed reduction ratios are selected in consideration of the convenience for a user (for example, see Japanese Patent Application Laid-Open No. 10-110793 (Fig. 21)).

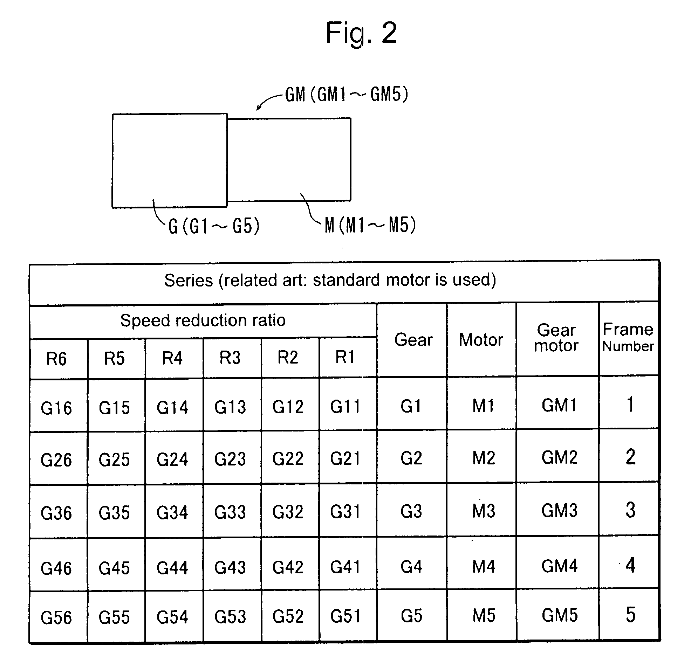

Fig. 2 illustrates a configuration of a representative series of gear motors of the related art.

The series of gear motors of Fig. 2 include: multiple types of (in the example shown in the drawing, five types from 1 to 5) gears G1 to G5 with different frame numbers set according to the allowable torque (or capacity); and multiple types of motors (standard motors) M1 to M5 with different frame numbers set according to the generated torque, where a gear motor GM3 is formed by connecting the gear G3 of the specific frame number (for example, the frame number 3) selected therefrom to the motor M3.

The gears G1 to G5 respectively have six types of speed reduction ratios R1 to R6. Eventually, since thirty types of gears (5x6=30) with six types of speed reduction ratios are connected to the motors of five types of frame numbers, thirty types of gear motors are formed in total as a series. A user selects a gear motor with an arbitrary speed reduction ratio having an arbitrary allowable torque (or capacity) from multiple types of gear motors which are prepared in this way and uses it as a separate component or a single component of the other machines (for example, a commodity distribution machine).

In recent years, IEC (International Electrotechnical Commission) 60034-2-1 which defines a method of calculating the efficiency of a motor rotating at a constant speed was issued in 2007, and IEC60034-30 which defines the efficiency class using the calculating method was issued on October, 2008. Here, the efficiency class is obtained by classifying the efficiency reference value into classes, and hence IE4 (super premium efficiency), IE3 (premium efficiency), IE2 (high efficiency), and IE1 (standard efficiency) are defined from the highest efficiency.

With the movement of energy saving, there has been a schedule for regulating the usage of the motor with standard efficiency (IE1) in various countries. However, since the IE1 type motor of the related art may be sold until regulation is practically implemented and is cheap, there is demand for the motor from users. Further, the IE1 type motor which is installed as a component for driving a subject driving device before regulation needs to be stocked for replacement even after regulation is implemented.

This also means that the maker of the motor needs to prepare multiple types of motors with different efficiencies for the motor which generates the same generation torque or capacity for the time being from now on. Even in the IE2 to IE4 type motors, when the same basic series as that of the related art need to be constructed, three types of basic series need to be "newly" constructed for each efficiency as shown in Fig. 2. That is, the number of motors which need to be prepared increases four times compared to a case where whole series is constructed only by the IE1 type motor of the related art, and hence the maker cannot avoid an extremely heavy manufacturing burden or an extremely heavy inventory burden.

### SUMMARY OF THE INVENTION

It is desirable to suppress an increase in the number of types of motors in total in the whole series and hence provide a low-cost gear motor in each basic series by reasonably and commonly using motors of respective basic series with different efficiencies.

The embodiment of the invention solves the above-described problems by adopting a series of gear motors including: multiple types of gears with different frame numbers set according to an allowable torque or a capacity; multiple types of motors with different frame numbers set according to a generation torque or a capacity, the gear and the motor of the specific frame number selected therefrom being connected to each other so as to form a gear motor; a first basic series in which the efficiency of the motor is low; and a second basic series in which the efficiency of the motor is higher than that of the first basic series, wherein the motor which is connected to the gear of the specific frame number of the first basic series is connected to the gear of the frame number smaller than the specific frame number of the second basic series.

In order to improve the efficiency of the motor, for example, various techniques are known, such as (1) preparing a motor using a magnet such as IPM or SPM; (2) changing a material (stuff) of a component such as a core or a winding; (3) changing a thickness of a coil, a winding pattern (a shape of a slot), and the like; and (4) suppressing a flowing current to be small. In the invention, the technique of (4) is mainly examined, and is relatively understood by the relation with the concept of the frame number relating to the torque or the capacity.

That is, in the invention, the basic series in which the efficiencyof the motor is different is not understood as a separate form but a form of a series of gear motors in which the motor and the gear are connected to each other, and the motor which is connected to the gear of the specific frame number of the first basic series is connected to the gear of the frame number smaller than the specific frame number of the second basic series.

According to the series of gear motors of the invention, since the motor with the same configuration may be commonly used in the basic series with low efficiency and the basic series with higher efficiency, it is possible to largely suppress an increase in the number of types of the motors in the whole series and reduce the manufacturing cost and the inventory cost of the motor of the whole series.

It is possible to suppress an increase in the number of types of motors in total in the whole series and hence provide a low-cost gear motor in each basic series by reasonably and commonly using motors of respective basic series with different efficiency.

### BRIEF DESCRIPTION OF THE DRAWINGS

Fig. 1 is a schematic diagram illustrating a configuration example of a series of gear motors according to an embodiment of the invention.
Fig. 2 is a schematic diagram illustrating a configuration example of a series of gear motors of the related art.

### DETAILED DESCRIPTION OF THE INVENTION

Hereinafter, an example of a series of gear motors according to an embodiment of the invention will be described in detail by referring to the drawings.

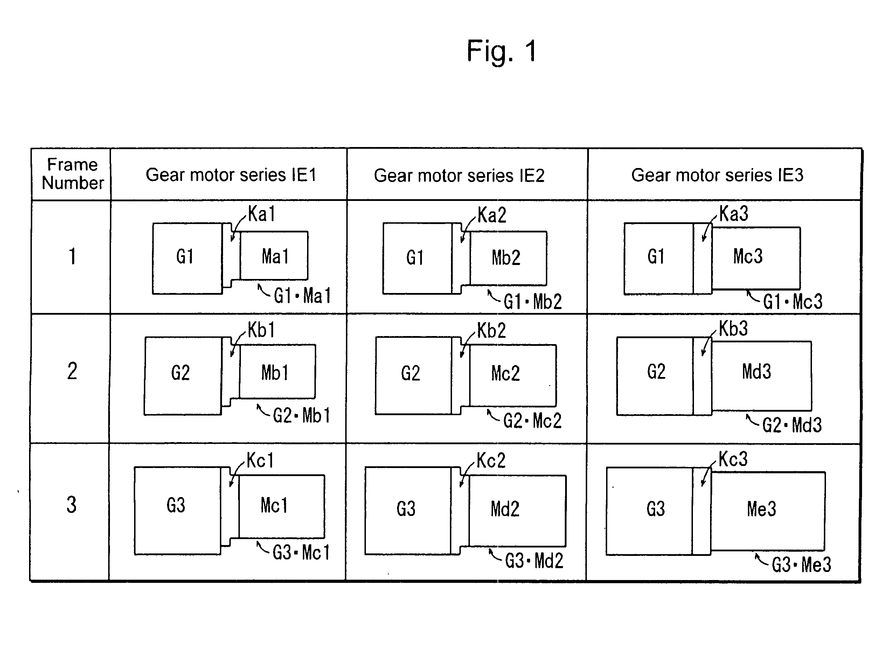

Fig. 1 is a schematic diagram illustrating a configuration example of a series of gear motors according to an embodiment of the invention.

In Fig. 1, the basic series IE1 of the leftmost column correspond to the standard series of gear motors of the related art (Fig. 2). Further, the basic series IE2 of the center column corresponds to the basic series which adopt the motor with higher efficiency than that of the motor of IE1, and the basic series IE3 of the rightmost column corresponds to the basic series which adopt the motor with much higher efficiency. Furthermore, herein, only one type is shown for each of gears G1 to G3, but the gears G1 to G3 evolve to conduct multiple speed reduction ratios as in the related art (Fig. 2).

The basic series IE1 with a standard efficiency include: multiple types of (in this example, three types from 1 to 3) gears G1 to G3 which have different frame numbers set according to the allowable torque (which includes the concept of the capacity) and multiple types of (in this example, three types from 1 to 3) motors Mal to Mc1 which have different frame numbers set according to the generation torque (which includes the concept of the capacity). Then, a gear motor G1•Ma1 is formed by connecting a gear G1 of a specific frame number (for example, the frame number 1) selected from the motors to a motor (in this case, a motor Mal) of (the same frame number 1). The system of the basic series is the same as that of the related art.

Even in the basic series IE2 with a high efficiency, the relation between the gears G1 to G3 and the motors Mb2, Mc2, and Md2 in the basic series IE2 is the same as that of the basic series IE1, and as a result, the gear motors G1•Mb2, G2•Mc2, and G3•Md2 are formed as a series.

Furthermore, even in the basic series IE3 with higher efficiency, the relation between the gears G1 to G3 and the motors Mc3, Md3, and Me3 in the basic series IE3 is the same as that of the basic series IE1, and as a result, the gear motors G1•Mc3, G2•Md3, and G3•Me3 are formed as a series.

The gears G1 to G3 are common to the basic series IE1 to IE3. As the frame number, in this example, three frame numbers 1 to 3 are prepared for all basic series, and the transmission torque (the capacity) sequentially increases in this order. The allowable torques of the respective gears G1 to G3 increase as the frame number increases (G1<G2<G3). That is, the transmission torque (the capacity) of the frame number 1 is the smallest, and the transmission torque (the capacity) of the frame number 3 is the largest. Accordingly, the magnitudes of the allowable torques of the gears G1 to G3 are set as the relation of G1<G2<G3.

Here, with regard to the numerals and signs which are attached to the respective motors, the central lower case alphabet indicates the type of the motor, and the final numeral indicates the category of the efficiency. That is, for example, Mc1, Mc2, and Mc3 which are respectively present in the respective basic series are the same motor which is referred to as Mc (this definition will be specifically described later). Furthermore, the motor Mc1 satisfies the standard condition IE1, the motor Mc2 satisfies the standard condition IE2, and the motor Mc3 satisfies the standard condition IE3.

Even in each motor, the generation torque (or the capacity) increases as the frame number increases. Accordingly, the magnitude of the generation torque of each motor is set as Ma1<Mb1<Mc1, Mb2<Mc2<Md2, and Mc3<Md3<Me3 according to the frame number in each basic series.

Furthermore, in order to connect the gears G1 to G3 with different sizes to the respective motors, splice covers Ka1 to Kc1, Ka2 to Kc2, and Ka3 to Kc3 are respectively disposed between the gears G1 to G3 and the respective motors. The splice covers Ka1 to Kc1, Ka2 to Kc2, and Ka3 to Kc3 may exhibit excellent functions when they are formed as members which are independent from the gears G1 to G3 and the motors, but may not be necessarily formed as independent members. For example, the load-side covers of the motors or the opposite-load-side covers of the gears G1 to G3 may have functions of the splice cover.

As apparent from Fig. 1, in the series of gear motors, the motor which is connected to the gear of the specific frame number of the basic series IE1 is connected to the gear of the frame number smaller than the specific frame number of the basic series IE2.

For example, the motor Mb1 which is connected to the gear G2 of the specific frame number 2 of the basic series IE1 is connected to the gear G1 of the frame number 1 (the frame number smaller than the specific frame number 2) of the basic series IE2, so that it is used as the motor Mb2 of the basic series IE2. Further, the motor Mc1 which is connected to the gear G3 of the specific frame number 3 of the basic series IE1 is connected to the gear G2 of the frame number 2 (the frame number smaller than the specific frame number 3) of the basic series IE2, so that it is used as the motor Mc2 of the basic series IE2.

Then, the motor Mc2 of the basic series IE2 is further connected to the gear G1 of the frame number 1 (the frame number smaller than the specific frame number 2) of the basic series IE3, so that it is used as the motor Mc3 of the basic series IE3. As the relation between the motor Mc3 of the basic series IE3 and the motor Mc1 of the basic series IE1, the motor Mc1 which is connected to the gear G3 of the specific frame number 3 of the basic series IE1 is connected to the gear G1 of the frame number 1 (the frame number smaller than the specific frame number 3) of the basic series IE3, so that it is used as the motor Mc3 of the basic series IE3.

When the motor Mb1 which is connected to the specific frame number of the basic series IE1, for example, the gear G2 of the frame number 2 is connected to the gear G1 of the frame number 1 smaller than the specific frame number 2 of the basic series IE2, it is used as the motor Mb2 of the basic series IE2. Accordingly, the motor Mb1 is used as a motor with a (rated) capacity smaller than the (rated) capacity when the motor is used as the motor Mb1 of the basic series IE1. For this reason, the (rated) capacity to be used as the motor Mb2 of the basic series IE2 is marked on the name plate of the motor Mb2.

For example, when the motor is used as the motor Mb1 of the basic series IE1, since the motor is used with a rated capacity of 1.5 kw, 1.5 kw is marked on the nameplate. When the motor is used as the motor Mb2 of the basic series IE2, since the motor is used with a rated capacity of 0.75 kw, 0.75 kw is marked on the nameplate. Further, at this time, the efficiency such as IE1 and IE2 is marked thereon in addition to the rated capacity. Furthermore, the marking position of the rated capacity is not limited to the nameplate, and they may be marked on several positions of the motor. The marking method is not limited to the method of directly marking the rated capacity, and when the rated capacity may be identified, for example, the rated capacities may be represented as colors or signs correlated to the respective rated capacities.

If necessary, the motors of the embodiment are commonly used (the motors are the same). This means the common hardware components, for example, members such as a casing (more specifically, a casing other than a splice cover when the load-side cover of the casing has a function of a splice cover), a rotor, a stator, a motor shaft, a bearing, and an oil seal. Such hardware components may be commonly used together with the material thereof.

However, in the configurations of the electrical system and the control system, the flowing current and the like are respectively adjusted when the respective motors are connected to a power supply so that, for example, the motor Mb1 ensures the torque characteristics necessary for the motor the frame number 2 of the basic series IE1 and the motor Mb2 ensures the torque characteristics necessary for the motor of the frame number 1 of the basic series IE2. Specifically, when the motor is used as the motor Mb1 of the basic series IE1, a large current (which is the same as that of the related art) flows so that a torque necessary for the frame number 2 is generated. On the other hand, when the motor is used as the motor Mb2 of the basic series IE2, a current which is suppressed to be low is designed to flow on the satisfactory condition in which the torque necessary for the frame number 1 is generated. In other words, the fact that the "flowing current is suppressed" is a large factor enabling the motor Mb1 to be used as the motor Mb2.

As described above, originally the "frame number" is classified based on the concept of the "torque (or the capacity) ", but does not correspond to the classification of the efficiency. Accordingly, for example, even when the motor Mb1 which is assembled to the gear G2 of the frame number 2 is simply combined with the gear G1 of the frame number 1 which is smaller by one class, the motor may not be directly used as the motor of IE2.

Thus, in the embodiment, there is a need to essentially conduct an operation in which the efficiency of each of the motors Ma to Me matches with each of the standards of IE2 to IE3 which are practically used. However, specifically, as described above, this operation is different from the techniques, (1) preparing a motor using a magnet such as IPM or SPM; (2) changing a material (stuff) of a component such as a core or a winding; (3) changing a thickness of a coil, a winding pattern (a shape of a slot), and the like; (4) suppressing a flowing current to be small; and the like. Accordingly, this does not mean an additional increase in the number of developing procedures. Of course, although a development which satisfies the standards required in the respective basic series IE2 to IE3 needs to be conducted after suppressing an increase in the cost as much as possible, in the case of the embodiment, since the technique of (4) is already "adopted", there is a tendency for the development load according to the techniques (1) to (3) to become smaller, and the standards of the respective basic series IE2 to IE3 may be easily realized.

According to the series of gear motors of the embodiment, when the configuration example of Fig. 1 is exemplified, nine necessary motors may be finished as five motors. In fact, since the number of frame numbers of the respective basic series is ten in many cases, the motor which has the same hardware configuration may be commonly used between the basic series with different efficiency, and hence the manufacturing cost and the inventory cost of the motors of the whole series may be reduced. Furthermore, in the experiment of the inventor, when there is a need to satisfy a standard which is required in a basic series with a frame number having a certain basic series using the motors Ma to Me, the excessive quality (the efficiency which is much higher than the demanded efficiency) may be obtained in the frame number having another basic series. However, the excessive quality may improve the reliability of the maker, but basically does not cause a problem. Then, there is a merit that a motor with the same hardware configuration may be used between different basic series.

Furthermore, in the above-described embodiment, the series configuration examples of the basic series IE1 to IE3 are shown, but the technical concept may, of course, evolve to the basic series IE4.

Further, in the above-described embodiment, in the case of a basic series in which the efficiency is different by one rank, a motor with the same hardware configuration is combined with a gear of which the frame number is smaller than that by one rank. Furthermore, in the case of a basic series of which the efficiency is different by two ranks, a motor with the same hardware configuration is combined with a gear of which the frame number is smaller than that by two ranks. However, in the invention, the shift between the rank of the basic series and the rank of the frame number may not be correlated to each other in this way. For example, even when the rank of the basic series is different only by one rank as in the case of the basic series IE1 and IE2 or IE2 and IE3, a motor may be combined with a gear of which the frame number is smaller than that by two or three or more ranks. When the number of frame numbers is large and a difference between the frame numbers is small, such a method of combining a motor with a gear of which the frame number is different by two or more ranks may be effective.

On the contrary, in the case of a motor which is used in three or more basic series, such as the motor Mc, for example, when the excessive quality is obtained in one basic series, the frame number may be made to be different by one rank even when the basic series are different by two ranks. In this case, it is an option to directly use the same motor for the gear of the same frame number in the basic series which are different from each other only by one rank, but in the invention, this is not prohibited (in the case of this example, the invention is applied only between the basic series which are different from each other by two ranks). In this way, the invention may be implemented in a part of a region in the whole series, and a single shift relation in which the whole series of gear motors are united does not need to be constructed.

## Claims

1. A series of gear motors comprising:
multiple types of gears with different frame numbers set according to an allowable torque or a capacity;
multiple types of motors with different frame numbers set according to a generation torque or a capacity, the gear and the motor of the specific frame number selected therefrom being connected to each other so as to form a gear motor;
a first basic series in which the efficiency of the motor is low; and
a second basic series in which the efficiency of the motor is higher than that of the first basic series,
wherein the motor which is connected to the gear of the specific frame number of the first basic series is connected to the gear of the frame number smaller than the specific frame number of the second basic series.

2. The series of gear motors according to claim 1,
wherein when the motor of the specific frame number of the first basic series is connected to the gear of the frame number smaller than the specific frame number of the second basic series, the motor is used as a motor with a rated capacity smaller than the rated capacity when the motor is used as the first basic series:

3. The series of gear motors according to claim 2,
wherein when the motor of the specific frame number of the first basic series is connected to the gear of the frame number smaller than the specific frame number of the second basic series, the rated capacity to be used as the motor of the second basic series is marked on the motor so as to be identified.

4. The series of gear motors according to any one of claims 1 to 3, further comprising:
a third basic series in which the efficiency of the motor is higher than that of the second basic series,
wherein the motor of the specific frame number of the second basic series is connected to the gear of the frame number smaller than the specific frame number of the third basic series.

5. The series of gear motors according to claim 4,
wherein the motor of the specific frame number of the first basic series is connected to the gear of the frame number smaller than the specific frame number of the third basic series.
